# EUROPEAN PATENT APPLICATION

(11) **EP 4 722 221 A1**
(43) Date of publication of application: **08.04.2026**
(21) Application number: 24815236.5
(22) Date of filing: 16.05.2024
(51) Int. Cl.: C07F 7/18

(54) **ORGANOXYSILANE COMPOUND HAVING CARBOXY GROUP PROTECTED WITH SILYL GROUP AND PRODUCTION METHOD THEREFOR**

(30) Priority: 26.05.2023 JP 2023087027
(71) Applicant: SHIN-ETSU CHEMICAL CO., LTD., Tokyo 100-0005 (JP)
(72) Inventor: TONOMURA Yoichi, Joetsu-shi, Niigata 942-8601 (JP)
(74) Representative: Mewburn Ellis LLP
(86) International application number: PCT/JP2024/018179
(87) International publication number: WO 2024/247752

(57) **Abstract**

Provided is an organoxysilane compound represented by general formula (1) which has a carboxy group protected with a silyl group. The organoxysilane compound, when used as a silane coupling agent, a surface treatment agent, a resin additive, a coating additive, an adhesive, etc., is inhibited from undergoing a silyl group elimination reaction, can impart rigidity, heat resistance, and high mechanical strength, and exhibits an excellent addition effect. 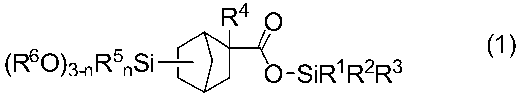 (In the formula, R¹ represents a C3-20, unsubstituted, secondary or tertiary hydrocarbon group, R², R³, R⁵, and R⁶ each independently represent a C1-20 (un)substituted monovalent hydrocarbon group, R⁴ represents a hydrogen atom or a methyl group, and n indicates 0, 1, or 2.)

## Description

### TECHNICAL FIELD

The present invention relates to organoxysilane compounds which have a silyl-protected carboxyl group and are useful as, for example, silane coupling agents, surface treatment agents, resin additives, coating additives and adhesives. The invention also relates to a method for preparing such compounds.

### BACKGROUND ART

Organoxysilane compounds which have a carboxyl group are useful as, for example, silane coupling agents, surface treatment agents, resin additives, coating additives and adhesives. However, because the carboxyl group and the organosilyl group may react with each other, compounds in which the carboxyl group is protected are common.

Examples of such organoxysilane compounds which have a protected carboxyl group include the alkoxysilane compounds having a trimethylsilyl-protected carboxyl group described in Patent Document 1 and the triisopropylsilyl-protected organoxysilane compounds described in Patent Document 2.

### PRIOR ART DOCUMENTS

### PATENT DOCUMENTS

Patent Document 1: JP-A H08-325276
Patent Document 2: JP-A 2018-70480

### SUMMARY OF INVENTION

### TECHNICAL PROBLEM

However, in the compound described in Patent Document 1, because the carboxyl group-protecting group is a trimethylsilyl group, the trimethylsilyl group is readily eliminated, allowing reaction between the carboxyl group and the organoxysilyl group to proceed. Hence, when the compound is used as, for example, a silane coupling agent, surface treatment agent, resin additive, coating additive or adhesive, a sufficient effect is not exhibited. The silyl group elimination reaction proceeds less readily in the Patent Document 2 compound than in the compound in Patent Document 1, yet the elimination reaction-suppressing effect is inadequate.

Recently, in optical materials, electronic materials and the like, there is a growing desire for resins and cured products thereof to have rigidity, heat resistance and high mechanical strength. However, satisfactory rigidity and heat resistance and high mechanical strength cannot be imparted in known organoxysilane compounds having a silyl-protected carboxyl group.

The present invention was arrived at in light of the above circumstances. An object of this invention is to provide an organoxysilane compound which has a silyl-protected carboxyl group, in which, when the compound is used as a silane coupling agent, surface treatment agent, resin additive, coating additive, adhesive or the like, the silyl group elimination reaction is suppressed, and which is able to impart rigidity, heat resistance and high mechanical properties, thus manifesting excellent addition effects. Another object is to provide a method for preparing such a compound.

### SOLUTION TO PROBLEM

The inventor has conducted intensive investigations aimed at achieving the above object, discovering as a result that when a organoxysilane compound having a carboxyl group protected with a specific silyl group is used as a silane coupling agent, surface treatment agent, resin additive, coating additive, adhesive or the like, the silyl group elimination reaction is suppressed and the compound is able to impart rigidity, heat resistance and high mechanical properties, thus manifesting excellent addition effects.

Accordingly, the invention provides:
1. A silyl-protected carboxyl group-containing organoxysilane compound of general formula (1) below 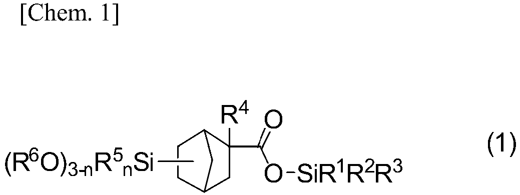 (wherein R¹ is an unsubstituted secondary or tertiary hydrocarbon group of 3 to 20 carbon atoms, R², R³, R⁵ and R⁶ are each independently a substituted or unsubstituted monovalent hydrocarbon group of 1 to 20 carbon atoms, R⁴ is a hydrogen atom or a methyl group, and n is 0, 1 or 2);
2. The silyl-protected carboxyl group-containing organoxysilane compound of 1 above, wherein R¹ is an unsubstituted secondary hydrocarbon group of 3 to 20 carbon atoms, and R² and R³ are unsubstituted secondary hydrocarbon groups of 3 to 20 carbon atoms;
3. The silyl-protected carboxyl group-containing organoxysilane compound of 1 above, wherein R¹ is an unsubstituted tertiary hydrocarbon group of 4 to 20 carbon atoms, and R² and R³ are unsubstituted primary hydrocarbon groups of 1 to 20 carbon atoms;
4. The silyl-protected carboxyl group-containing organoxysilane compound of 1 or 2 above, wherein R¹ to R³ are all isopropyl groups;
5. The silyl-protected carboxyl group-containing organoxysilane compound of 1 or 3 above, wherein R¹ is a tert-butyl group and R² and R³ are methyl groups; and
6. A method for preparing the silyl-protected carboxyl group-containing organoxysilane compound of 1 above, which method includes the step of reacting a silyl-protected carboxyl group-containing norbornene compound of general formula (2) below 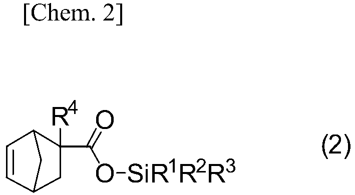 (wherein R¹, R², R³ and R⁴ have the same meanings as above) with a hydrogensilane compound of general formula (3) below

   HSiR⁵ₙ(OR⁶)₃₋ₙ (3)

   (wherein R⁵, R⁶ and n have the same meanings as above) in the presence of a platinum compound.

### ADVANTAGEOUS EFFECTS OF INVENTION

In the silyl-protected carboxyl group-containing organoxysilane compounds of the invention, the silyl elimination reaction is suppressed. Moreover, these compounds can impart rigidity, heat resistance and high mechanical strength and manifest excellent addition effects at the time of use, making them useful as, for example, silane coupling agents, surface treatment agents, resin additives, coating additives and adhesives.

### BRIEF DESCRIPTION OF DRAWINGS

[FIG. 1] FIG. 1 shows an ¹H-NMR spectrum of the 5-methyl-5-triisopropylsiloxycarbonyl-2-norbornene obtained in Synthesis Example 1.
[FIG. 2] FIG. 2 shows an IR spectrum of the 5-methyl-5-triisopropylsiloxycarbonyl-2-norbornene obtained in Synthesis Example 1.
[FIG. 3] FIG. 3 shows an ¹H-NMR spectrum of the 5-methyl-5-tert-butyldimethylsiloxycarbonyl-2-norbornene obtained in Synthesis Example 2.
[FIG. 4] FIG. 4 shows an IR spectrum of the 5-methyl-5-tert-butyldimethylsiloxycarbonyl-2-norbornene obtained in Synthesis Example 2.
[FIG. 5] FIG. 5 shows an ¹H-NMR spectrum of the 2-methyl-2-triisopropylsiloxycarbonyl-5-trimethoxysilylnorbornane obtained in Example 1.
[FIG. 6] FIG. 6 shows an IR spectrum of the 2-methyl-2-triisopropylsiloxycarbonyl-5-trimethoxysilylnorbornane obtained in Example 1.
[FIG. 7] FIG. 7 shows an ¹H-NMR spectrum of the 2-methyl-2-triisopropylsiloxycarbonyl-5-methyldimethoxysilylnorbornane obtained in Example 2.
[FIG. 8] FIG. 8 shows an IR spectrum of the 2-methyl-2-triisopropylsiloxycarbonyl-5-methyldimethoxysilylnorbornane obtained in Example 2.
[FIG. 9] FIG. 9 shows an ¹H-NMR spectrum of the 2-methyl-2-triisopropylsiloxycarbonyl-5-triethoxysilylnorbornane obtained in Example 3.
[FIG. 10] FIG. 10 shows an IR spectrum of the 2-methyl-2-triisopropylsiloxycarbonyl-5-triethoxysilylnorbornane obtained in Example 3.
[FIG. 11] FIG. 11 shows an ¹H-NMR spectrum of the 2-methyl-2-triisopropylsiloxycarbonyl-5-methyldiethoxysilylnorbornane obtained in Example 4.
[FIG. 12] FIG. 12 shows an IR spectrum of the 2-methyl-2-triisopropylsiloxycarbonyl-5-methyldiethoxysilylnorbornane obtained in Example 4.
[FIG. 13] FIG. 13 shows an ¹H-NMR spectrum of the 2-methyl-2-tert-butyldimethylsiloxycarbonyl-5-methyldiethoxysilylnorbornane obtained in Example 5.
[FIG. 14] FIG. 14 shows an IR spectrum of the 2-methyl-2-tert-butyldimethylsiloxycarbonyl-5-methyldiethoxysilylnorbornane obtained in Example 5.

### DESCRIPTION OF EMBODIMENTS

The silyl-protected carboxyl group-containing organoxysilane compound of the invention is a compound of general formula (1) below (referred to below as "Compound (1)").

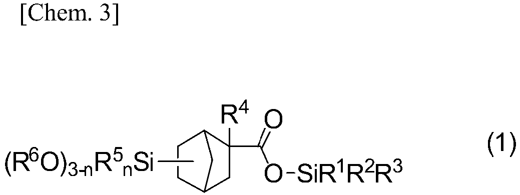

In general formula (1), R¹ is an unsubstituted secondary or tertiary hydrocarbon group of 3 to 20 carbon atoms, preferably 3 to 10 carbon atoms, and more preferably 3 to 5 carbon atoms.

Examples of the secondary hydrocarbon group of R¹ include isopropyl, isobutyl and sec-butyl groups. Examples of the tertiary hydrocarbon group include tert-butyl, tert-amyl, thexyl and cumyl groups.

Of these, the secondary hydrocarbon group of R¹ is more preferably an isopropyl group, and the tertiary hydrocarbon group of R¹ is more preferably a tert-butyl group.

In general formula (1), R², R³, R⁵ and R⁶ are each independently a substituted or unsubstituted monovalent hydrocarbon group of 1 to 20 carbon atoms, preferably 1 to 10 carbon atoms, and more preferably 1 to 5 carbon atoms.

The monovalent hydrocarbon groups of R², R³, R⁵ and R⁶ may be linear, branched or cyclic. Specific examples include linear alkyl groups such as methyl, ethyl, n-propyl, n-butyl, n-pentyl, n-hexyl, n-heptyl, n-octyl, n-nonyl, n-decyl, n-dodecyl, n-tetradecyl, n-hexadecyl, n-octadecyl and n-icosyl groups; branched alkyl groups such as isopropyl, isobutyl, sec-butyl, tert-butyl, thexyl and 2-ethylhexyl groups; cyclic alkyl groups such as cyclopentyl and cyclohexyl groups; alkenyl groups such as vinyl, allyl, propenyl, 1-butenyl and 1-pentenyl groups; aryl groups such as phenyl, tolyl and xylyl groups; and aralkyl groups such as benzyl and phenethyl groups.

Of these, R², R³, R⁵ and R⁶ are preferably substituted or unsubstituted linear, branched or cyclic alkyl groups or alkenyl groups of 1 to 10 carbon atoms, aryl groups or aralkyl groups of 6 to 10 carbon atoms. Particularly from the standpoint of the availability of the starting materials, unsubstituted linear or branched alkyl groups of 1 to 3 carbon atoms are more preferred, and methyl, ethyl and isopropyl groups are even more preferred.

Some or all of the hydrogen atoms on these monovalent hydrocarbon groups may be substituted with other substituents. These substituents are exemplified by alkoxy groups of 1 to 3 carbon atoms, such as methoxy, ethoxy and propoxy groups; halogen atoms, such as fluorine, chlorine and bromine; aryl groups of 6 to 10 carbon atoms, such as phenyl and tolyl groups; aralkyl groups of 7 to 10 carbon atoms, such as benzyl and phenethyl groups; and cyano groups, amino groups, ester groups, ether groups, carbonyl groups, acyl groups of 2 to 10 carbon atoms and sulfide groups. These may be used singly or two or more may be used in combination. The substitution sites for these substituents are not particularly limited; nor is there any limitation on the number of substituents.

Regarding the combination of R¹, R² and R³, in cases where R¹ is an unsubstituted secondary hydrocarbon group of 3 to 20 carbon atoms, it is preferable for R² and R³ to be unsubstituted secondary hydrocarbon groups of 3 to 20 carbon atoms; a combination in which R¹ to R³ are all isopropyl groups is more preferred. In cases where R¹ is an unsubstituted tertiary hydrocarbon group of 4 to 20 carbon atoms, it is preferable for R² and R³ to be unsubstituted primary hydrocarbon groups of 1 to 20 carbon atoms; a combination in which R¹ is a tert-butyl group and R² and R³ are methyl groups is more preferred. With such combinations, suppression of the silyl group elimination reaction and adjustment in the degree to which the elimination reaction proceeds after use become more possible.

Specific examples of Compound (1) include
2-tert-butyldimethylsiloxycarbonyl-5-trimethoxysilylnorbornane,
2-tert-butyldimethylsiloxycarbonyl-5-methyldimethoxysilylnorbornane,
2-tert-butyldimethylsiloxycarbonyl-5-dimethylmethoxysilylnorbornane,
2-tert-butyldimethylsiloxycarbonyl-5-triethoxysilylnorbornane,
2-tert-butyldimethylsiloxycarbonyl-5-methyldiethoxysilylnorbornane,
2-tert-butyldimethylsiloxycarbonyl-5-dimethylethoxysilylnorbornane,
2-triisopropylsiloxycarbonyl-5-trimethoxysilylnorbornane,
2-triisopropylsiloxycarbonyl-5-methyldimethoxysilylnorbornane,
2-triisopropylsiloxycarbonyl-5-dimethylmethoxysilylnorbornane,
2-triisopropylsiloxycarbonyl-5-triethoxysilylnorbornane,
2-triisopropylsiloxycarbonyl-5-methyldiethoxysilylnorbornane,
2-triisopropylsiloxycarbonyl-5-dimethylethoxysilylnorbornane,
2-tert-butyldimethylsiloxycarbonyl-6-trimethoxysilylnorbornane,
2-tert-butyldimethylsiloxycarbonyl-6-methyldimethoxysilylnorbornane,
2-tert-butyldimethylsiloxycarbonyl-6-dimethylmethoxysilylnorbornane,
2-tert-butyldimethylsiloxycarbonyl-6-triethoxysilylnorbornane,
2-tert-butyldimethylsiloxycarbonyl-6-methyldiethoxysilylnorbornane,
2-tert-butyldimethylsiloxycarbonyl-6-dimethylethoxysilylnorbornane,
2-triisopropylsiloxycarbonyl-6-trimethoxysilylnorbornane,
2-triisopropylsiloxycarbonyl-6-methyldimethoxysilylnorbornane,
2-triisopropylsiloxycarbonyl-6-dimethylmethoxysilylnorbornane,
2-triisopropylsiloxycarbonyl-6-triethoxysilylnorbornane,
2-triisopropylsiloxycarbonyl-6-methyldiethoxysilylnorbornane,
2-triisopropylsiloxycarbonyl-6-dimethylethoxysilylnorbornane,
2-methyl-2-tert-butyldimethylsiloxycarbonyl-5-trimethoxysilylnorbornane,
2-methyl-2-tert-butyldimethylsiloxycarbonyl-5-methyldimethoxysilylnorbornane,
2-methyl-2-tert-butyldimethylsiloxycarbonyl-5-dimethylmethoxysilylnorbornane,
2-methyl-2-tert-butyldimethylsiloxycarbonyl-5-triethoxysilylnorbornane,
2-methyl-2-tert-butyldimethylsiloxycarbonyl-5-methyldiethoxysilylnorbornane,
2-methyl-2-tert-butyldimethylsiloxycarbonyl-5-dimethylethoxysilylnorbornane,
2-methyl-2-triisopropylsiloxycarbonyl-5-trimethoxysilylnorbornane,
2-methyl-2-triisopropylsiloxycarbonyl-5-methyldimethoxysilylnorbornane,
2-methyl-2-triisopropylsiloxycarbonyl-5-dimethylmethoxysilylnorbornane,
2-methyl-2-triisopropylsiloxycarbonyl-5-triethoxysilylnorbornane,
2-methyl-2-triisopropylsiloxycarbonyl-5-methyldiethoxysilylnorbornane,
2-methyl-2-triisopropylsiloxycarbonyl-5-dimethylethoxysilylnorbornane,
2-methyl-2-tert-butyldimethylsiloxycarbonyl-6-trimethoxysilylnorbornane,
2-methyl-2-tert-butyldimethylsiloxycarbonyl-6-methyldimethoxysilylnorbornane,
2-methyl-2-tert-butyldimethylsiloxycarbonyl-6-dimethylmethoxysilylnorbornane,
2-methyl-2-tert-butyldimethylsiloxycarbonyl-6-triethoxysilylnorbornane,
2-methyl-2-tert-butyldimethylsiloxycarbonyl-6-methyldiethoxysilylnorbornane,
2-methyl-2-tert-butyldimethylsiloxycarbonyl-6-dimethylethoxysilylnorbornane,
2-methyl-2-triisopropylsiloxycarbonyl-6-trimethoxysilylnorbornane,
2-methyl-2-triisopropylsiloxycarbonyl-6-methyldimethoxysilylnorbornane,
2-methyl-2-triisopropylsiloxycarbonyl-6-dimethylmethoxysilylnorbornane,
2-methyl-2-triisopropylsiloxycarbonyl-6-triethoxysilylnorbornane,
2-methyl-2-triisopropylsiloxycarbonyl-6-methyldiethoxysilylnorbornane and
2-methyl-2-triisopropylsiloxycarbonyl-6-dimethylethoxysilylnorbornane.

Next, a method for preparing Compound (1) of the invention is described. Compound (1) can be prepared by, for example, reacting a silyl-protected carboxyl group-containing norbornene compound of general formula (2) below (referred to below as "Compound (2)") with a hydrogensilane compound of general formula (3) below (referred to below as "Compound (3)") in the presence of a platinum catalyst. 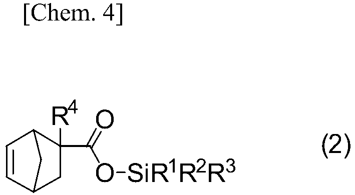 (wherein R¹ to R⁴ have the same meanings as above)

HSiR⁵ₙ(OR⁶)₃₋ₙ (3)

(wherein R⁵, R⁶ and n have the same meanings as above)

Specific examples of Compound (2) include 5-tert-butyldimethylsiloxycarbonyl-2-norbornene, 5-triisopropylsiloxycarbonyl-2-norbornene, 5-methyl-5-tert-butyldimethylsiloxycarbonyl-2-norbornene and 5-methyl-5-triisopropylsiloxycarbonyl-2-norbornene.

Specific examples of Compound (3) include trimethoxysilane, methyldimethoxysilane, dimethylmethoxysilane, triethoxysilane, methyldiethoxysilane and dimethylethoxysilane.

The compounding ratio between Compound (2) and Compound (3) is not particularly limited. However, from the standpoint of the reactivity and the productivity, the amount of Compound (3) per mole of Compound (2) is preferably from 0.5 to 2.0 moles, and more preferably from 0.8 to 1.5 moles.

In the reaction of Compound (2) with Compound (3), a platinum compound is used as the catalyst. Examples of the platinum compound include chloroplatinic acid, alcohol solutions of chloroplatinic acid, toluene or xylene solutions of a platinum-1,3-divinyl-1,1,3,3-tetramethyldisiloxane complex, tetrakis(triphenylphosphine)platinum, dichlorobis(triphenylphosphine)platinum, dichlorobis(acetonitrile)platinum, dichlorobis(benzonitrile)platinum, dichloro(cyclooctadiene)platinum and platinum-activated carbon.

The amount of platinum compound used is not particularly limited. However, from the standpoint of the reactivity and the productivity, the amount per mole of Compound (2) is preferably from 0.000001 to 0.2 mole, and more preferably from 0.00001 to 0.1 mole.

The reaction temperature of the above reaction is not particularly limited, but is preferably between 0°C and 200°C, and more preferably between 20°C and 150°C. The reaction time also is not particularly limited, but is preferably from 1 to 40 hours, and more preferably from 1 to 20 hours. The reaction atmosphere is preferably an atmosphere of an inert gas such as nitrogen or argon.

The reaction proceeds even in the absence of a solvent, although a solvent may be used. Examples of the solvent include hydrocarbon solvents such as pentane, hexane, cyclohexane, heptane, isooctane, benzene, toluene and xylene; ether solvents such as diethyl ether, tetrahydrofuran and dioxane; ester solvents such as ethyl acetate and butyl acetate; aprotic polar solvents such as acetonitrile, N,N-dimethylformamide and N-methylpyrrolidone; and chlorinated hydrocarbon solvents such as dichloromethane and chloroform. One of these solvents may be used alone, or two or more may be used in combination.

The target substance can be recovered from the reaction mixture obtained in the above manner by a conventional technique such as distillation or low-boiling compound removal.

Compound (2) can be prepared by a Diels-Alder reaction between a silyl (meth)acrylate compound of general formula (4) below (referred to below as "Compound (4)") and cyclopentadiene or dicyclopentadiene. 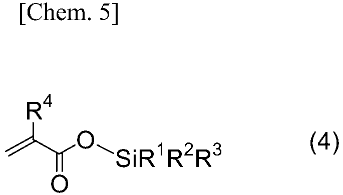 (wherein R¹ to R⁴ have the same meanings as above)

The compounding ratio between Compound (4) and cyclopentadiene or dicyclopentadiene is not particularly limited. However, from the standpoint of the reactivity and the productivity, the amount of cyclopentadiene or dicyclopentadiene per mole of Compound (4) is preferably set in the range of, in terms of cyclopentadiene, 0.5 to 2.0 moles, and especially 0.8 to 1.5 moles.

The reaction temperature of the above reaction is not particularly limited, but is preferably between 0°C and 200°C, and more preferably between 20°C and 180°C. The reaction time also is not particularly limited, but is preferably from 1 to 40 hours, and more preferably from 1 to 20 hours. The reaction atmosphere is preferably an atmosphere of an inert gas such as nitrogen or argon.

This reaction proceeds even in the absence of a solvent, although a solvent may be used. Examples of solvents that may be used include hydrocarbon solvents such as pentane, hexane, cyclohexane, heptane, isooctane, benzene, toluene and xylene; ether solvents such as diethyl ether, tetrahydrofuran and dioxane; ester solvents such as ethyl acetate and butyl acetate; aprotic polar solvents such as acetonitrile, N,N-dimethylformamide and N-methylpyrrolidone; and chlorinated hydrocarbon solvents such as dichloromethane and chloroform. One of these solvents may be used alone, or two or more may be used in combination.

### EXAMPLES

Synthesis Examples and Examples of the invention are given below by way of illustration, although the invention is not limited by these Examples.

### [Synthesis Example 1]

A flask equipped with a stirrer, a reflux condenser, a dropping funnel and a thermometer was charged with 242.4 g (1.0 mol) of triisopropylsilyl methacrylate and 66.2 g (0.5 mol) of dicyclopentadiene, heated to 160°C, and stirred at that temperature for 8 hours. The reaction mixture was distilled, giving 208.0 g of a fraction that boils at 127°C/0.3 kPa.

The mass spectrum, ¹H-NMR spectrum and IR spectrum of the resulting fraction were measured. From those results, the compound obtained was identified as 5-methyl-5-triisopropylsiloxycarbonyl-2-norbornene (referred to below as "Norbornene A").

### [Mass spectrum]

m/z 308, 265, 243, 199, 171, 69

### [¹H-NMR spectrum (heavy chloroform solvent)]

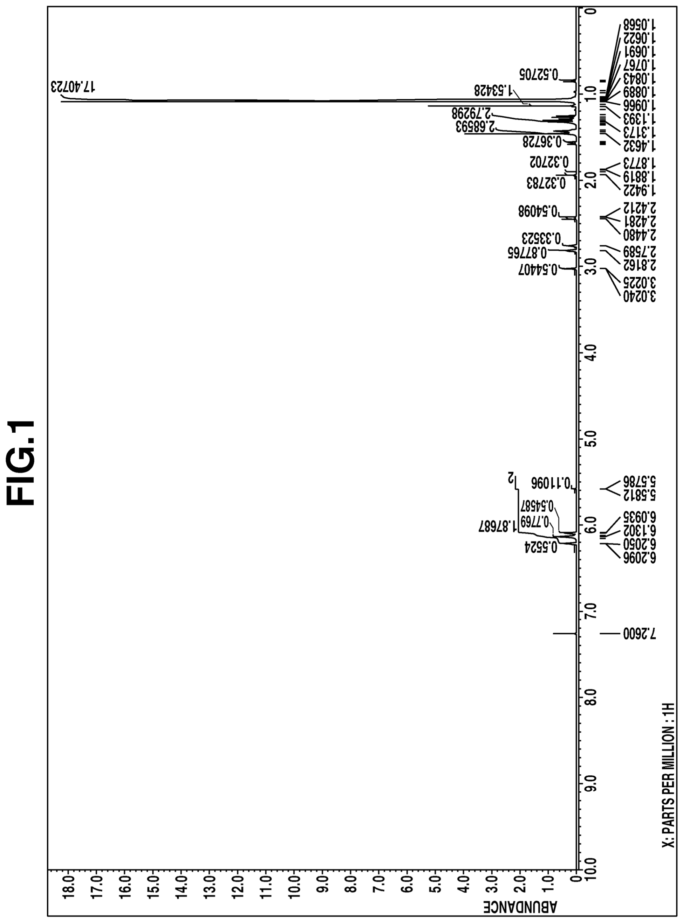

See chart in FIG. 1.

### [IR spectrum]

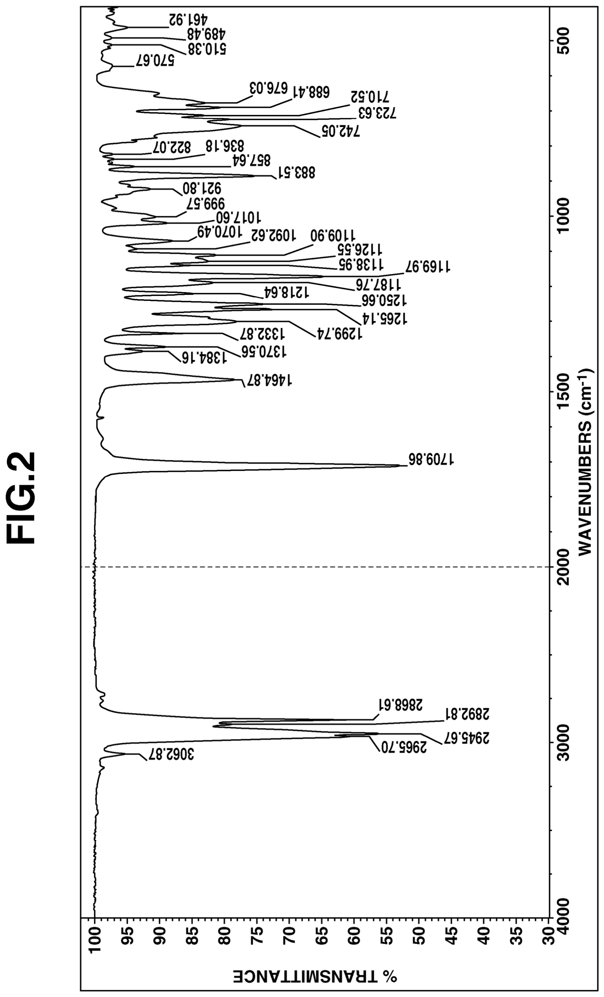

See chart in FIG. 2.

### [Synthesis Example 2]

A flask equipped with a stirrer, a reflux condenser, a dropping funnel and a thermometer was charged with 200.4 g (1.0 mol) of tert-butyldimethylsilyl methacrylate and 66.2 g (0.5 mol) of dicyclopentadiene, heated to 160°C, and stirred at that temperature for 4 hours. The reaction mixture was distilled, giving 192.1 g of a fraction that boils at 103°C/0.4 kPa.

The mass spectrum, ¹H-NMR spectrum and IR spectrum of the resulting fraction were measured. From those results, the compound obtained was identified as 5-methyl-5-tert-butyldimethylsiloxycarbonyl-2-norbornene (referred to below as "Norbomene B").

### [Mass spectrum]

m/z 266, 201, 185, 143, 69, 66

### [¹H-NMR spectrum (heavy chloroform solvent)]

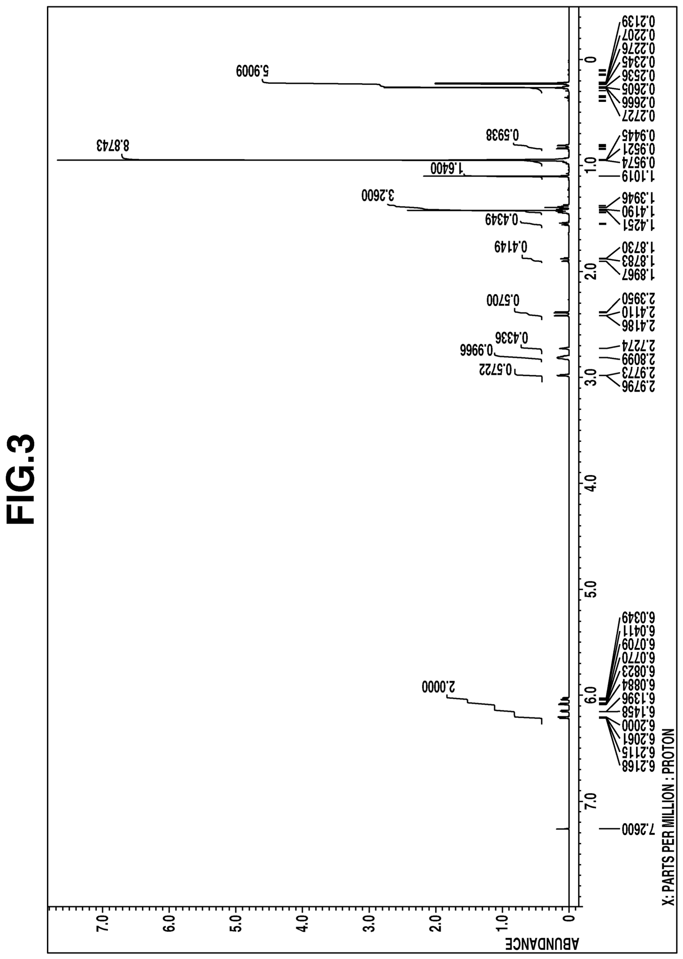

See chart in FIG. 3.

### [IR spectrum]

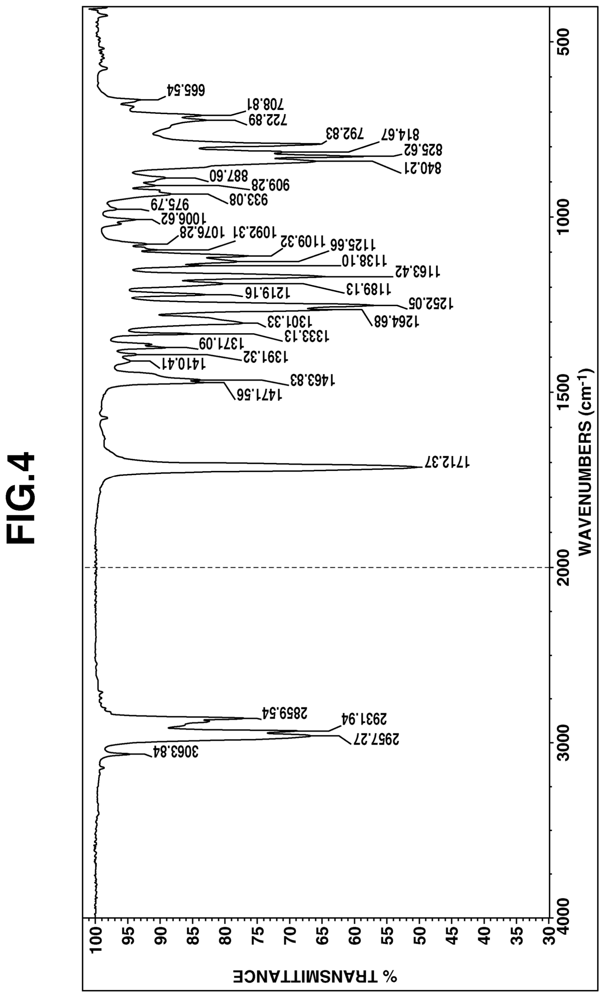

See chart in FIG. 4.

### [Example 1]

A flask equipped with a stirrer, a reflux condenser, a dropping funnel and a thermometer was charged with 30.9 g (0.1 mol) of the Norbornene A obtained in Synthesis Example 1 and 0.07 g of a 3 wt% toluene solution of a platinum-1,3-divinyl-1,1,3,3-tetramethyldisiloxane complex, and heated to 60°C. After the internal temperature stabilized, 12.2 g (0.1 mol) of trimethoxysilane was added dropwise over 2 hours at 60 to 70°C, and the mixture was stirred 2 hours at that temperature. The reaction mixture was distilled, giving 22.4 g of a fraction that boils at 155 to 165°C/0.08 kPa.

The mass spectrum, ¹H-NMR spectrum and IR spectrum of the resulting fraction were measured. From those results, the compound obtained was identified as 2-methyl-2-triisopropylsiloxycarbonyl-5-trimethoxysilylnorbornane.

### [Mass spectrum]

m/z 415, 387, 251, 199, 121, 91

### [¹H-NMR spectrum (heavy chloroform solvent)]

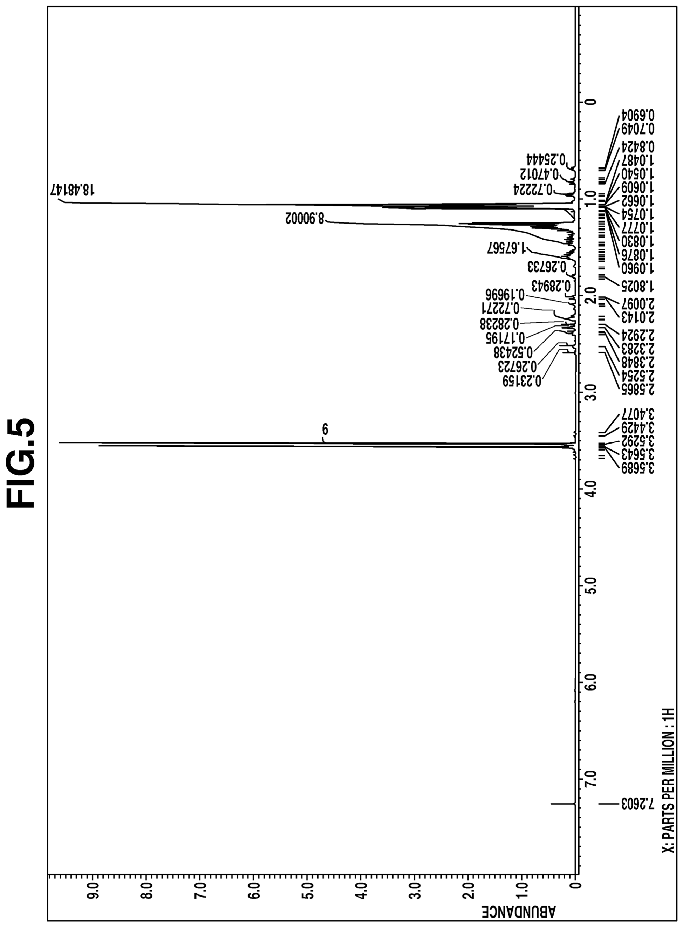

See chart in FIG. 5.

### [IR spectrum]

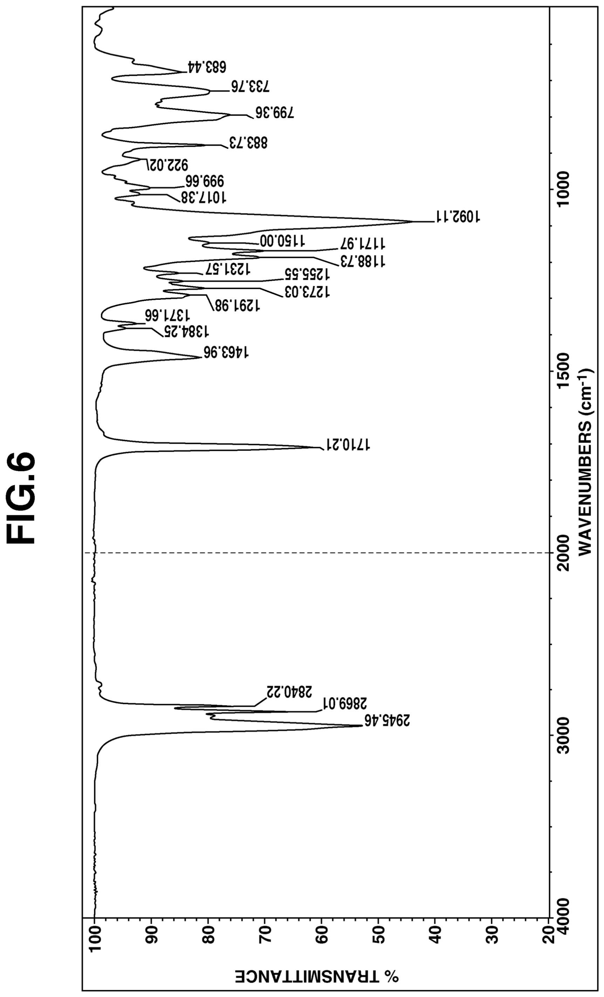

See chart in FIG. 6.

### [Example 2]

A flask equipped with a stirrer, a reflux condenser, a dropping funnel and a thermometer was charged with 30.9 g (0.1 mol) of the Norbornene A obtained in Synthesis Example 1 and 0.07 g of a 3 wt% toluene solution of a platinum-1,3-divinyl-1,1,3,3-tetramethyldisiloxane complex, and heated to 60°C. After the internal temperature stabilized, 10.6 g (0.1 mol) of methyldimethoxysilane was added dropwise over 2 hours at 60 to 70°C, and the mixture was stirred 2 hours at that temperature. The reaction mixture was distilled, giving 31.5 g of a fraction that boils at 154 to 160°C/0.1 kPa.

The mass spectrum, ¹H-NMR spectrum and IR spectrum of the resulting fraction were measured. From those results, the compound obtained was identified as 2-methyl-2-triisopropylsiloxycarbonyl-5-methyldimethoxysilylnorbornane.

### [Mass spectrum]

m/z 399, 371, 249, 199, 105, 75

### [¹H-NMR spectrum (heavy chloroform solvent)]

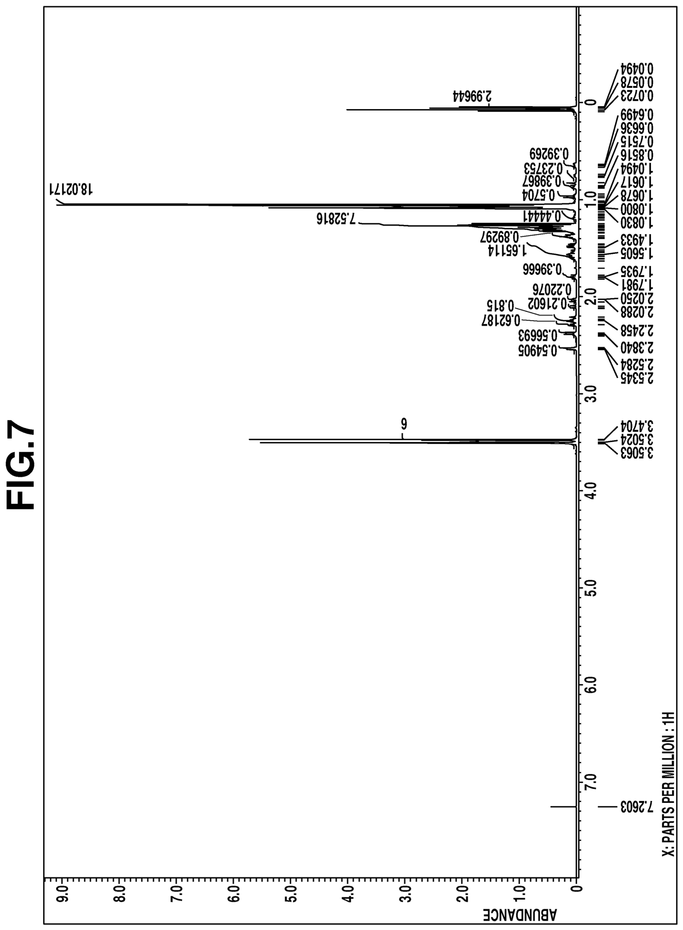

See chart in FIG. 7.

### [IR spectrum]

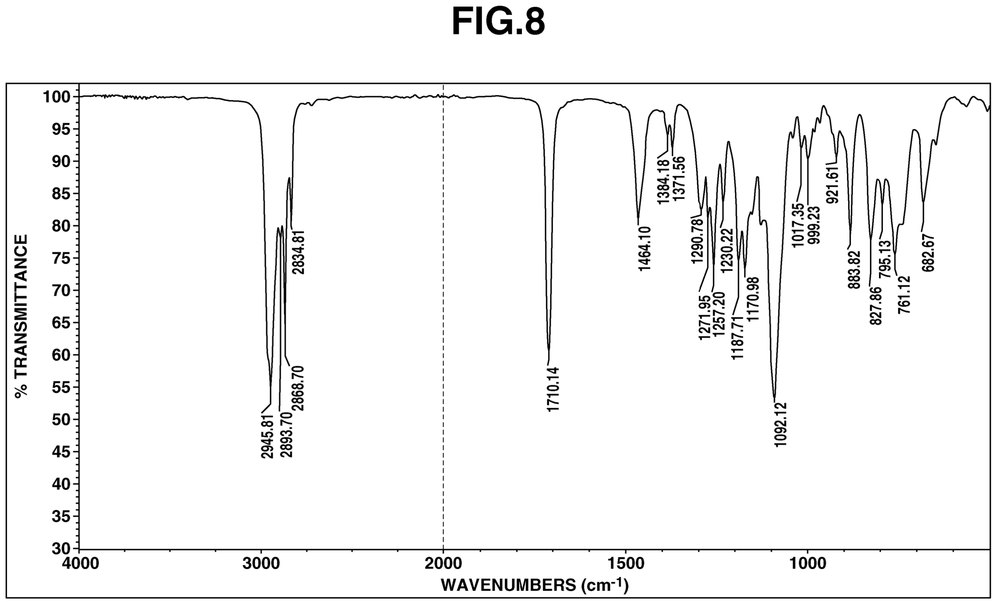

See chart in FIG. 8.

### [Example 3]

A flask equipped with a stirrer, a reflux condenser, a dropping funnel and a thermometer was charged with 61.7 g (0.2 mol) of the Norbornene A obtained in Synthesis Example 1 and 0.13 g of a 3 wt% toluene solution of a platinum-1,3-divinyl-1,1,3,3-tetramethyldisiloxane complex, and heated to 60°C. After the internal temperature stabilized, 32.9 g (0.2 mol) of triethoxysilane was added dropwise over 2 hours at 60 to 70°C, and the mixture was stirred 2 hours at that temperature. The reaction mixture was distilled, giving 57.3 g of a fraction that boils at 143 to 155°C/0.03 kPa.

The mass spectrum, ¹H-NMR spectrum and IR spectrum of the resulting fraction were measured. From those results, the compound obtained was identified as 2-methyl-2-triisopropylsiloxycarbonyl-5-triethoxysilylnorbornane.

### [Mass spectrum]

m/z 457, 429, 225, 199, 163, 119

### [¹H-NMR spectrum (heavy chloroform solvent)]

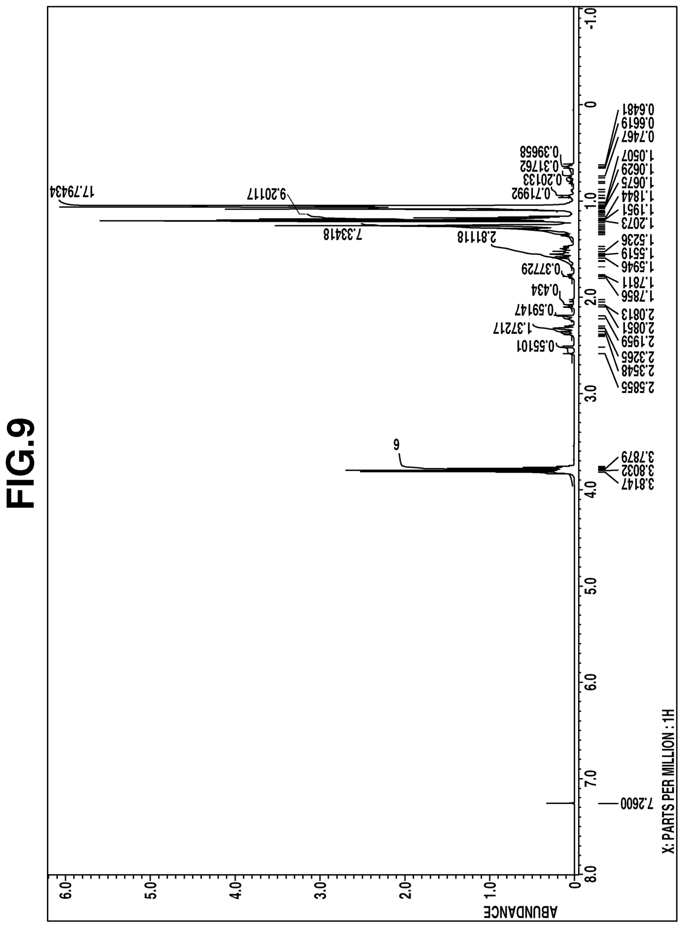

See chart in FIG. 9.

### [IR spectrum]

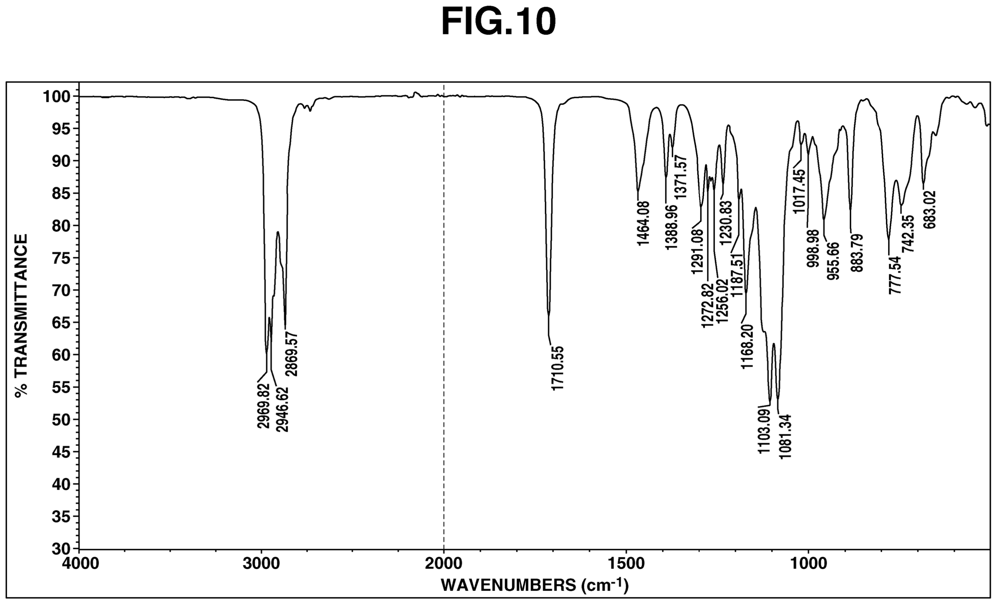

See chart in FIG. 10.

### [Example 4]

A flask equipped with a stirrer, a reflux condenser, a dropping funnel and a thermometer was charged with 30.9 g (0.1 mol) of the Norbornene A obtained in Synthesis Example 1 and 0.07 g of a 3 wt% toluene solution of a platinum-1,3-divinyl-1,1,3,3-tetramethyldisiloxane complex, and heated to 60°C. After the internal temperature stabilized, 13.4 g (0.1 mol) of methyldiethoxysilane was added dropwise over 2 hours at 60 to 70°C, and the mixture was stirred 2 hours at that temperature. The reaction mixture was distilled, giving 36.1 g of a fraction that boils at 164 to 175°C/0.1 kPa.

The mass spectrum, ¹H-NMR spectrum and IR spectrum of the resulting fraction were measured. From those results, the compound obtained was identified as 2-methyl-2-triisopropylsiloxycarbonyl-5-methyldiethoxysilylnorbornane.

### [Mass spectrum]

m/z 427, 399, 375, 263, 199, 133

### [¹H-NMR spectrum (heavy chloroform solvent)]

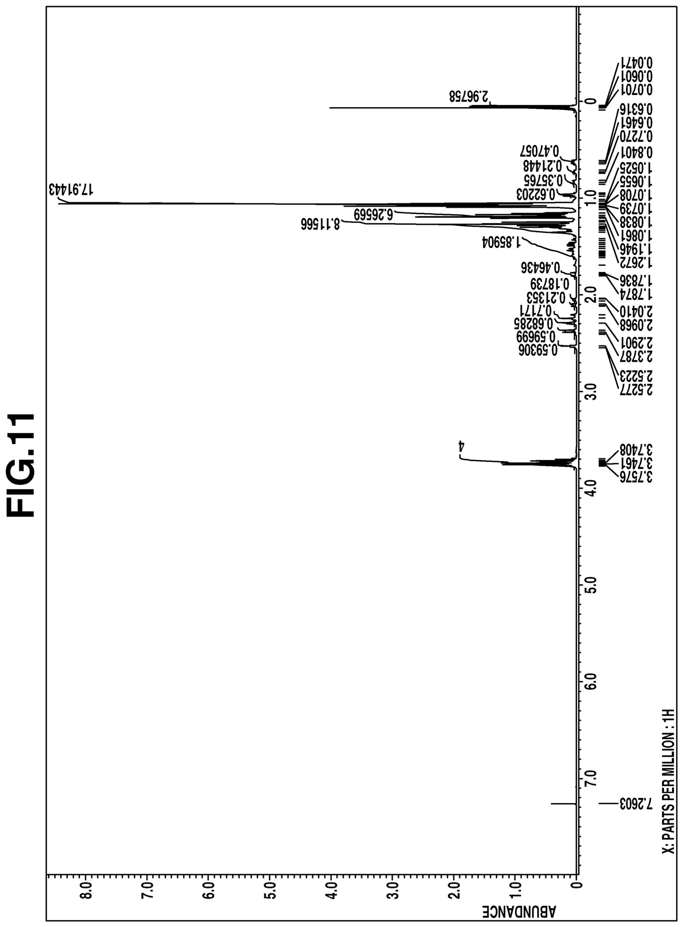

See chart in FIG. 11.

### [IR spectrum]

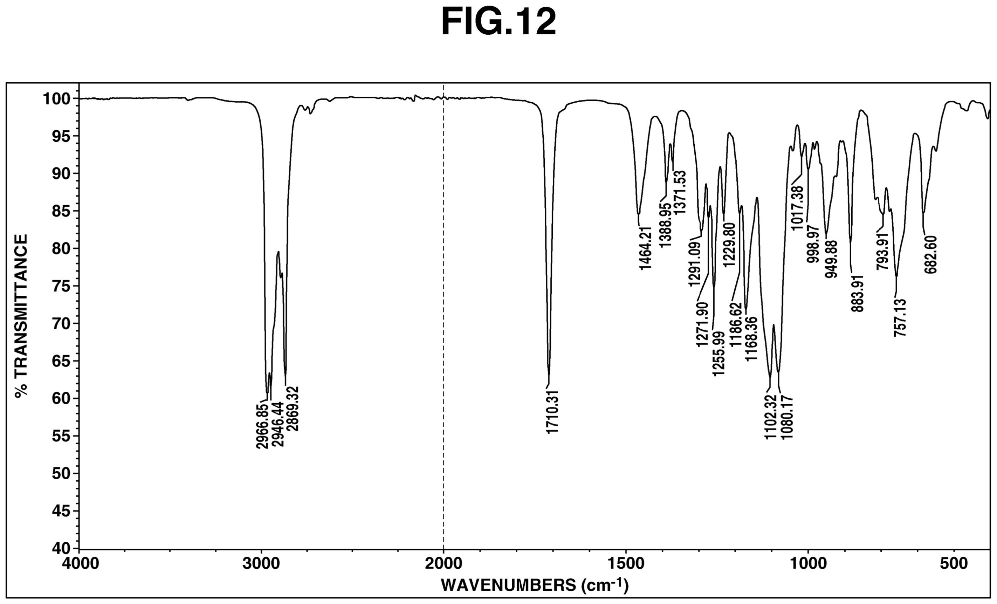

See chart in FIG. 12.

### [Example 5]

A flask equipped with a stirrer, a reflux condenser, a dropping funnel and a thermometer was charged with 53.3 g (0.2 mol) of the Norbornene B obtained in Synthesis Example 2 and 0.13 g of a 3 wt% toluene solution of a platinum-1,3-divinyl-1,1,3,3-tetramethyldisiloxane complex, and heated to 60°C. After the internal temperature stabilized, 26.9 g (0.2 mol) of methyldiethoxysilane was added dropwise over 2 hours at 60 to 70°C, and the mixture was stirred 2 hours at that temperature. The reaction mixture was distilled, giving 67.7 g of a fraction that boils at 145 to 153°C/0.06 kPa.

The mass spectrum, ¹H-NMR spectrum and IR spectrum of the resulting fraction were measured. From those results, the compound obtained was identified as 2-methyl-2-tert-butyldimethylsiloxycarbonyl-5-methyldiethoxysilylnorbornane.

### [Mass spectrum]

m/z 385, 207, 163, 143, 133, 77

### [¹H-NMR spectrum (heavy chloroform solvent)]

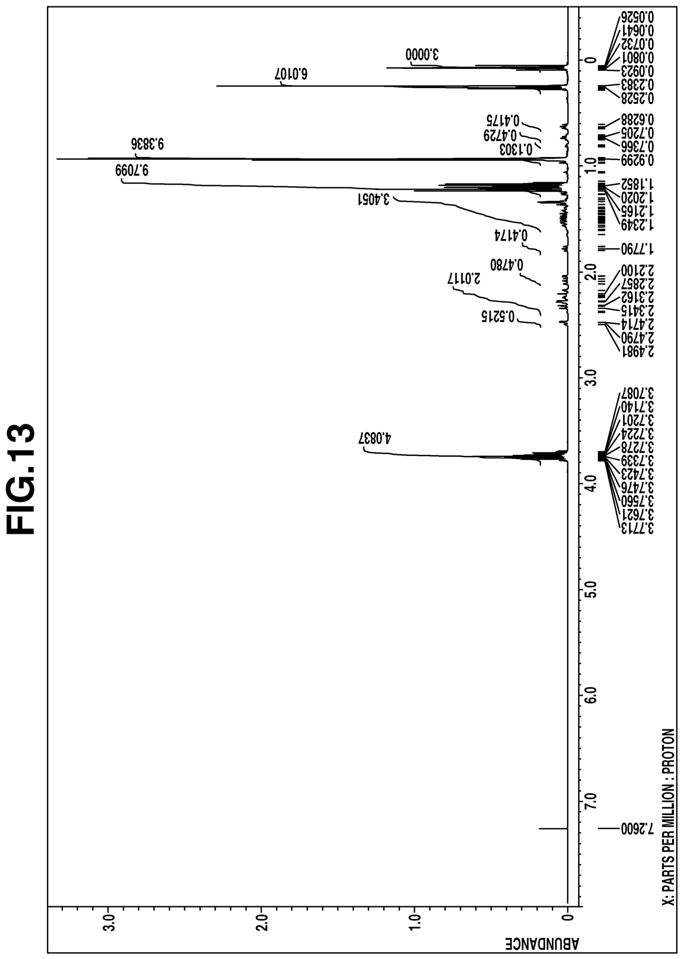

See chart in FIG. 13.

### [IR spectrum]

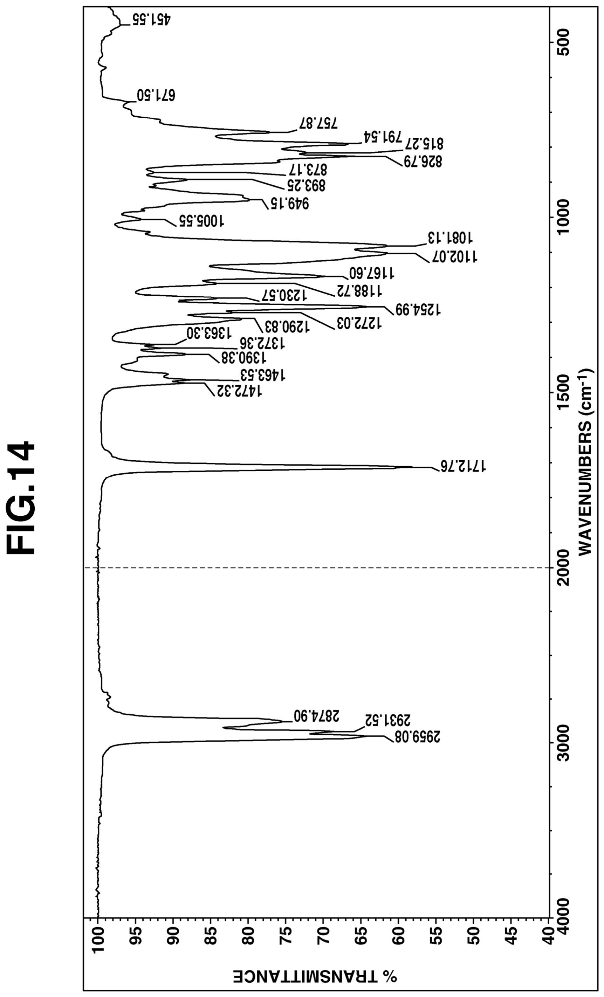

See chart in FIG. 14.

## Claims

1. A silyl-protected carboxyl group-containing organoxysilane compound of general formula (1) below 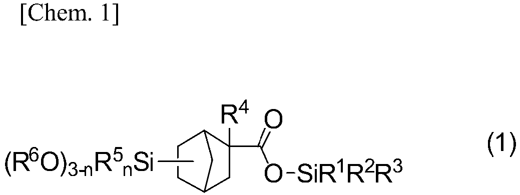 (wherein R¹ is an unsubstituted secondary or tertiary hydrocarbon group of 3 to 20 carbon atoms, R², R³, R⁵ and R⁶ are each independently a substituted or unsubstituted monovalent hydrocarbon group of 1 to 20 carbon atoms, R⁴ is a hydrogen atom or a methyl group, and n is 0, 1 or 2).

2. The silyl-protected carboxyl group-containing organoxysilane compound of claim 1, wherein R¹ is an unsubstituted secondary hydrocarbon group of 3 to 20 carbon atoms, and R² and R³ are unsubstituted secondary hydrocarbon groups of 3 to 20 carbon atoms.

3. The silyl-protected carboxyl group-containing organoxysilane compound of claim 1, wherein R¹ is an unsubstituted tertiary hydrocarbon group of 4 to 20 carbon atoms, and R² and R³ are unsubstituted primary hydrocarbon groups of 1 to 20 carbon atoms.

4. The silyl-protected carboxyl group-containing organoxysilane compound of claim 1 or 2, wherein R¹ to R³ are all isopropyl groups.

5. The silyl-protected carboxyl group-containing organoxysilane compound of claim 1 or 3, wherein R¹ is a tert-butyl group and R² and R³ are methyl groups.

6. A method for preparing the silyl-protected carboxyl group-containing organoxysilane compound of claim 1, comprising the step of reacting a silyl-protected carboxyl group-containing norbornene compound of general formula (2) below 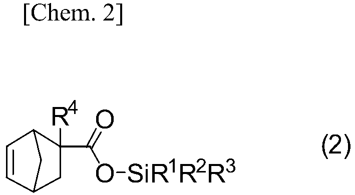 (wherein R¹, R², R³ and R⁴ have the same meanings as above) with a hydrogensilane compound of general formula (3) below
HSiR⁵ₙ(OR⁶)₃₋ₙ (3)
(wherein R⁵, R⁶ and n have the same meanings as above) in the presence of a platinum compound.
